# EUROPÄISCHE PATENTANMELDUNG

(11) **EP 0 884 172 A2**
(43) Veröffentlichungstag der Anmeldung: **16.12.1998**
(21) Anmeldenummer: 98201860.8
(22) Anmeldetag: 05.06.1998
(51) Int. Cl.: B32B 21/04, E04F 15/00

(54) **Flächenbelagelement und Flächenbelag, insbesondere Bodenbelagelement oder Wandbelagelement, und Verfahren hierzu**

(30) Priorität: 09.06.1997 CH 1384/97
(71) Anmelder: Rotterdamse Kurkenfabriek B.V., 3044 AS Rotterdam (NL)
(72) Erfinder: Fässler, Fridolin David, 8841 Gross (CH)
(74) Vertreter: Van den Heuvel, Henricus Theodorus

(57) **Zusammenfassung**

Die Erfindung bezieht sich auf ein Flächenbelagelement, insbesondere für Bodenbelag oder Wandverkleidung, das umfaßt:
- eine zentrale Trägerschicht aus Sperrholz,
- eine an einer ersten Seite der Trägerschicht angebrachte Oberflächenschicht und
- eine zweite, an der der Oberflächenschicht abgewandten Seite der Trägerschicht angebrachte Dämmschicht aus Kork.

Die Erfindung bezieht sich gleichzeitig auf einen Wand- oder Bodenbelag, der aus derartigen Flächenbelagelementen hergestellt wird, und auf ein Verfahren zur Herstellung eines derartigen Belags.

## Beschreibung

Die Erfindung betrifft ein Flächenbelagelement, insbesondere für Bodenbelag oder Wandbelag. Die Erfindung betrifft ferner einen Wand- oder Bodenbelag, der von benachbarten Flächenbelagelementen gebildet wird. Schließlich betrifft die Erfindung ein Verfahren zur Herstellung eines Wand- oder Bodenbelags.

Die gemäß dem heutigen Stand der Technik bekannten parkettartigen Bodenbeläge sind größtenteils unbefriedigend in ihrer Trittschalldämmung. Auch ist ihre Resistenz gegen Nässe und Luftfeuchtigkeitsschwankungen eingeschränkt. Dies heißt, bei den bisherigen parkettartigen Bodenbelägen ist das Problem der Dimensionsstabilität nicht gelöst. So wird der Bodenbelag sich bei Feuchtigkeit ausdehnen und im trockenem Zustand zusammenziehen.

Wenn z.B. ein massiver Parkettboden mit Feuchtigkeit in Berührung kommt, dehnt er sich aus und es bilden sich im Parkett Wellen. Wenn man umgekehrt eine Fußbodenheizung hat, trocknet das Holz aus, so daß sich das Holz wieder zusammenzieht und sich Risse und Fugen bilden können. Zwar geht dieser Effekt nach Abschaltung der Heizung wieder teilweise zurück, aber als Resultat bleibt, daß die Oberfläche nicht mehr vollständig geschlossen ist oder im Falle eines versiegelten Bodens eine gebrochene Versiegelung. Wenn nun anschließend beim Reinigen Wasser durch die gebrochene Oberfläche dringen kann, wird sich das Holz wieder verwerfen. Falls man einen solchen Boden renovieren möchte, müßte man entweder den ganzen Boden schleifen und wieder versiegeln oder aber den ganzen Boden ersetzen.

Ein weiterer Nachteil herkömmlicher Parkettböden liegt darin, daß sie den Trittschall nur ungenügend dämmen.

Die Offenlegungsschrift DE 36 31 390 beschreibt eine Parkettplatte, deren Träger eine zementgebundenen Holzspanplatte ist. Auf der Sichtseite wird mit Leim ein Holzfurnier aufgeklebt. Der Leim besteht aus einem wasserfesten Kunstharz. Auf der Rückseite des Trägers kann sich zur Versteifung ein ebenfalls durch wasserfestes Kunstharz befestigtes Gegenfurnier befinden. Die Versiegelung des Parketts erfolgt durch einen Polyurethanlack. Dank der Verwendung der speziellen Holzspanplatte und des wasserfesten Kunstharzes ist die Parkettplatte weitgehend feuchtigkeits- und wasserfest. Ein Nachteil dieser Parkettplatte ist, daß sie keine schallisolierende Wirkung hat. Außerdem werden die benachbarten Parkettplatten eng aneinander anliegend miteinander verbunden, weshalb der Untergrund, auf dem das Parkett verlegt wird, sehr gleichmäßig sein muß. Ungleichmäßigkeiten im Untergrund können von den Parkettplatten nur in sehr geringem Maße ausgeglichen werden. Außerdem ist es unmöglich, die Parkettplatten einzeln auszuwechseln.

Die PCT-Publikation WO 96/06248 beschreibt ein anderes Boden- oder Wandelement mit einem Träger aus einem extrudierten Kunststoffprofil. Mittels eines Klebstoffes mit hoher Schmelztemperatur wird auf diesen Träger eine Deckschicht aufgetragen. Die Deckschicht kann z.B. aus einem Holzfurnier bestehen. Auf der Unterseite des Kunststoffträgers kann wahlweise eine Korkschicht aufgebracht sein. Diese Boden- und Wandelemente weisen dank der Korkunterlage eine schalldämmende Wirkung auf und sind dank dem Kunststoffkern gegen Nässe unempfindlich. Ein Nachteil besteht jedoch darin, daß nicht nur natürliche Produkte zum Einsatz kommen, was beim zunehmenden Bewußtsein der Konsumenten für Naturprodukte auf Ablehnung stoßen kann. Auch ist eine Wiederverwendung des Materials nahezu unmöglich. Schließlich können auch diese Elemente nicht einzeln ausgetauscht werden, da sie eng aneinanderliegend miteinander verbunden werden.

Die vorliegende Erfindung stellt sich die Aufgabe, ein Flächenbelagelement und einen Flächenbelag mit schalldämmenden und wasserresistenten Eigenschaften zu entwickeln, die zudem möglichst weitgehend aus Naturprodukten bestehen. Im weiteren sollen die Flächenbelagelemente so gestaltet sein, daß sie leicht auszuwechseln sind und kleine Unebenheiten im Untergrund ausgeglichen werden können.

Die Aufgabe der Erfindung wird durch ein Flächenbelagelement nach Anspruch 1, einen Flächenbelag nach Anspruch 10 und ein Verfahren zur Herstellung eines Flächenbelags nach Anspruch 13 gelöst. Vorzugsausführungen werden in den abhängigen Ansprüchen beschrieben.

Vorzugsweise handelt es sich bei dem Flächenbelagelement um ein Bodenbelagelement oder ein Wandbelagelement, das dünn ausgeführt wird, so daß Unebenheiten beim Untergrund ausgeglichen werden können. Ein zusätzlicher Vorteil ist, daß die zur Herstellung eines derartigen Flächenbelagelements benötigte Materialmenge ebenfalls gering ist. Das Flächenbelagelement (hierin auch als Parkettplatte oder Platte bezeichnet) weist einen Träger auf, der mit einer vorzugsweise dünnen Oberflächenschicht versehen ist. Vorzugsweise ist die Oberflächenschicht dünner als der Träger (ungefähr um einen Faktor 5 bis 20). Der aus Sperrholz gefertigte Träger wird aus einem Naturstoff gebildet. Besonders vorzugsweise wird er aus Sperrholz gebildet, das dreifach wasserfest verleimt ist. Der Vorteil der Verwendung von Sperrholz für das Flächenbelagelement liegt darin, daß dieses bereits in sehr geringer Dicke gegenüber Verformungen beständig ist, die durch Feuchtigkeit hervorgerufen werden. Ein weiterer Vorteil ist der, daß es aus einem Naturstoff gebildet wird und, bei genügend dünner Ausführung, in solcher Weise biegsam ist, daß geringe Unebenheiten der Unterlage damit ausgeglichen werden können.

Die Oberfläche der Flächenbelagelemente ist vorzugsweise als Furnier ausgebildet, insbesondere ein Holzfurnier oder ein Korkfurnier. In diesem Fall besteht auch die Oberflächenschicht aus einem Naturstoff. Aber auch ein Metallfurnier, wie z.B. Aluminium, kann verwendet werden. Ebenso kann ein Kunststoffurnier verwendet werden, so z.B. ein Phototurnier. Ein Photofurnier kann z.B. die photographische Abbildung eines Parkettbodens darstellen.

Mit dem neuen Flächenbelagelement läßt sich ein außergewöhnlich dichter Flächenbelag des Bodens oder der Wand erzielen. Diese Eigenschaft kann mit einer sehr dünn ausgeführten Konstruktion erreicht werden, einer Trägerschicht zwischen 1 und 5 Millimeter, vorzugsweise zwischen 2 und 4 mm und besonders vorzugsweise etwa 3 mm, und einer Oberflächenschicht von weniger als 3 mm, vorzugsweise weniger als 1 mm und besonders vorzugsweise zwischen 0,3 und 0,5 mm, was dort, wo die Flächenbelagelemente angebracht werden, in niedrigen Kosten und relativ geringen Raumbedarf resultiert. In der Praxis haben sich sehr günstige Ergebnisse mit einer gesamten Konstruktionsdicke von weniger als 1 cm erwiesen; einer Trägerschicht von etwa 3 mm und einer Oberflächenschicht von etwa 4 mm, wobei dann noch die Dicke der Korkschicht und der Lackschicht dazu gezählt werden müssen. Ein sehr bedeutender weiterer Vorteil des erfindungsgemäßen Bodenbelags ist der, daß dieser ein hohes Maß an Formstabilität kennt. Neben der Tatsache, daß der Belag gut gegen die Einwirkung von Feuchtigkeit geschützt werden kann, bietet auch die Konstruktion der Flächenbelagelemente eine zusätzliche Garantie für diese Stabilität. Daneben gibt auch die Konstruktion, bei der die Flächenbelagelemente jeweils mit senkrechten Rändern einander gegenüber angeordnet sind, zusätzliche Stabilität.

Um ein besonders leichtes Auswechseln der einzelnen Flächenbelagelemente zu ermöglichen, sind diese vorzugsweise mit ebenen Seitenflächen versehen. Im Gegensatz zu den vielfach dem Stand der Technik entsprechenden Flächenbelagelementen, die mit Nut und Feder untereinander verbunden werden, sind die Flächenbelagelemente mit ebenen Seitenflächen auch einzeln auswechselbar. Durch einen einfachen Schnitt durch eine eventuell vorhandene Deckschicht entlang der Fugen eines bestimmten Flächenbelagelementes kann dieses Flächenbelagelement vom übrigen Belag getrennt werden. Das Flächenbelagelement kann dann herausgenommen und gegen ein anderes Element ausgetauscht werden. Danach muß der Belag durch Aufbringen einer Deckschicht wieder versiegelt werden, wobei die Fugen zwischen dem neu angebrachten Flächenbelagelement und dem übrigen Teil des Belags wieder gefüllt werden.

Vorzugsweise ist das Flächenbelagelement an mindestens einem Rand an der Oberflächenschichtseite zur Trägerschicht hin geneigt oder gefast. Diese Neigung am Rand kann in der Oberflächenschicht angebracht sein, aber es ist auch möglich, sie so weit durchlaufen zu lassen, daß diese durch die Oberflächenschicht bis in die zentrale Trägerschicht durchdringt. Eine andere Möglichkeit besteht darin, die zentrale Trägerschicht mit einem geneigten Rand zu versehen, worüber eine flexible Deckschicht angebracht wird. Im letzten Fall wird das Flächenbelagelement einen abgeschrägten Rand besitzen, aber die Deckschicht ist überall gleich dick. Je nach Materialwahl für die zentrale Trägerschicht und die Deckschicht und damit abhängig vom Verwendungszweck kann für eine der beiden Varianten entschieden werden. Zum Beispiel wird bei Anwendung einer Trägerschicht und Deckschicht mit unterschiedlichen Farben ein durch die Deckschicht reichender abgeschrägter Rand in einen Rand des Flächenbelagelementes resultieren, der eine andere Farbe als die Deckschicht hat. Dieser Effekt kann beabsichtigt sein oder muß für bestimmte Anwendungen gerade vermieden werden.

Der Vorteil der geneigten Ränder liegt darin, daß beim Aneinanderlegen einzelner Flächenbelagelemente auf Böden oder Wänden zwischen angrenzenden Flächenbelagelementen eine Kerbe ausgebildet wird. In der Praxis wird eine derartige Kerbe oft einen trichterförmigen Querschnitt haben. Diese Kerbe ist zur Aufnahme eines Dichtmittels, z.B. Lack geeignet. Auf diese Art und Weise kann gerade an der an der ein Flächenbelag zu Undichtigkeiten neigt, nämlich an der Schnittstelle zwischen den einzelnen Flächenbelagelementen, besonders viel Lack aufgebracht werden. Außerdem ist dieser Lack in der Kerbe in bedeutendem Maße vor äußeren Eingriffen, insbesondere mechanische Beanspruchung, besonders geschützt. Hierdurch wird auch bei starker Beanspruchung eine Verbindung zwischen zwei Flächenbelagelementen gut abgeschlossen bleiben.

Der geneigte Rand des Flächenbelagelementes ist vorzugsweise so ausgeführt, daß ein Dichtmittel, z.B. ein Siegellack, entlang dem Rand nach unten läuft. Auf diese Weise werden die Kerben in einem Bodenbelag, der aus erfindungsgemäßen Flächenbelagelementen gefertigt ist, von selbst voll laufen, wenn das Dichtmittel auf dem Boden aufgetragen wird. Vorzugsweise wird eine Steigung von etwa 100% oder mehr gewählt. Ein zusätzlicher Vorteil hiervon ist, daß die Fugen hierdurch optisch weniger auffällig sind. Außerdem erhöht eine starke Neigung die Fließgeschwindigkeit in die Kerbe. Schließlich kann bei einer starken Neigung die Kerbe möglichst tief gestaltet werden, so daß die Dicke der schützenden Schicht aus Dichtmittel in der Kerbe erhöht wird und so eine gute Abdichtung erreicht wird. Im Extremfall kann der Neigungswinkel derartig sein, daß er bis in die Trägerschicht hinein verläuft. Dies ist insbesondere dann tolerierbar, wenn die Kerbe zwischen den Trägerschichten benachbarter Flächenbelagelemente so klein ist, daß diese, wenn die Kerbe mit Dichtmittel gefüllt ist, nicht mehr sichtbar ist. Dieser Abstand liegt dann vorzugsweise in der Größenordnung von zehntel Millimetern, besonders vorzugsweise bei weniger als einem zehntel Millimeter.

In der bevorzugten Ausführung fällt der geneigte Rand in der Nähe einer senkrechten Seite des Flächenbelagelementes stärker ab als auf einem größeren Abstand der senkrechten Seite. Diese Ausführung hat den Vorteil, daß sich im kritischen Bereich bei der Fuge besonders viel Dichtmittel ansammeln kann und dennoch eine optische Unterbrechung durch eine dicke mit Dichtmittel gefüllte Fuge beschränkt bleibt, da die Dicke des Einschnittes an den Rändern minimiert wird.

In der bevorzugten Ausführung eines Flächenbelags wird, nachdem die Flächenbelagelemente in einer Ebene angebracht worden sind, eine erste Dichtmittellage aufgetragen und nach ihrem Aushärten eine zweite Dichtmittellage aufgebracht. Hierdurch ist es möglich, unterschiedliche Sorten Dichtmittel zu verwenden, z.B. eine erste Lage mit einem Dichtmittel, daß sich besonders zum Füllen der Fugen eignet. Dieses Dichtmittel ist vorzugsweise dünnflüssig, um so auch in besonders dünn ausgebildete Kerben eindringen zu können. Ein hierfür geeigneter Lack hat die Handelsbezeichnung S 100. Es handelt sich um einen transparenten Lack auf Polyurethanbasis. Nach dem Aushärten der ersten Lackschicht kann eine zweite höher viskose Lackschicht aufgebracht werden. Diese zweite Lackschicht kann so gewählt werden, daß diese sehr flach ausläuft und ein optisch gewünschtes Resultat liefert. Daneben kann hierfür ein Lack gewählt werden, der eine Oberflächenschicht mit hoher Härte ergibt.

Die Erfindung wird an Hand der in den folgenden Zeichnungen nicht begrenzten Ausführungsformen näher beschrieben. Hierbei zeigen:
- Fig. 1: einen Querschnitt durch ein erfindungsmäßiges Flächenbelagelement, das mit abgeschrägten Kanten versehen ist; und
- Fig. 2: einen Querschnitt durch zwei nebeneinander verlegte Flächenbelagelemente nach dem Versiegeln.

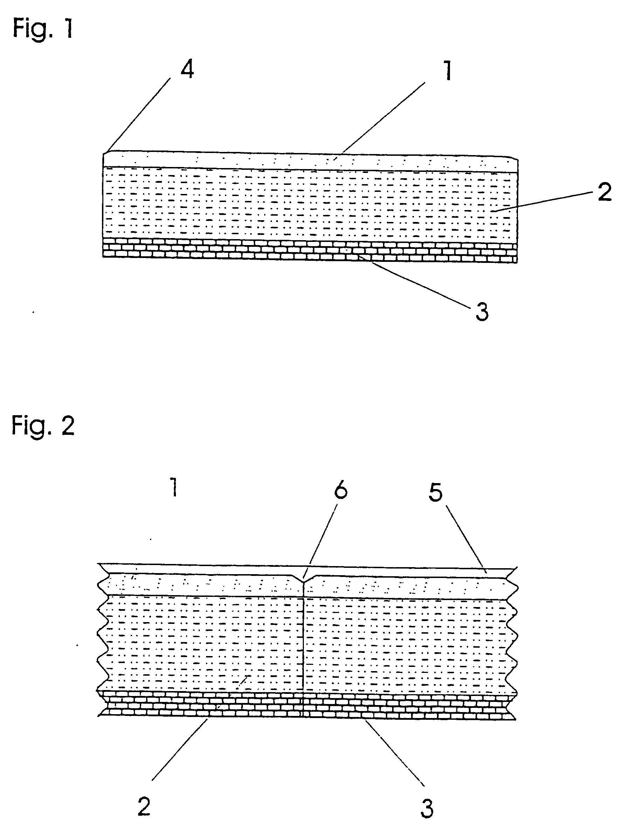

Das in Fig. 1 gezeigte Flächenbelagelement ist aufgebaut aus einem Träger 2, welcher aus Sperrholz besteht, einer dämmenden Schicht 3 aus Kork und einer Oberfläche 1, welche bei bevorzugten Ausbildungsformen aus Holzfurnier oder Kork besteht. Die dämmende Schicht 3 aus Kork, welche auf der Unterseite des Trägers 2 aufgebracht ist, gewährt eine gute Trittschalldämmung. Ausbildungsformen, bei denen die Oberfläche 1 nicht wie im Normalfall aus Holzfurnier oder Kork besteht, sind für spezielle Einsätze vorgesehen. So bietet beispielsweise eine Aluminiumoberfläche 1 einen guten Schutz gegen die schädigende Wirkung von Weichmachern, die durch Gummi-Abrieb auf den Boden gelangen.

Ein wichtiger Aspekt für die Wasserfestigkeit des verlegten Bodens sind die abgeschrägten Kanten (Fasen) 4 der einzelnen Platten. So zeigt Fig. 2 zwei nebeneinander liegende Platten, über die eine Lackschicht (Siegellack) 5 angebracht ist. Die abgeschrägten Kanten 5 der nebeneinander liegenden Platten bilden zusammen eine Kerbe 6, die vollständig mit Lack gefüllt ist. Dadurch entsteht nach dem Anbringen einer Lackschicht 5 eine vollständig geschlossene Oberfläche, die abhängig von der verwendeten Lacksorte vollkommen wasserfest ist. Die Platten eignen sich deshalb bestens als Bodenbelag für Wohnungen. Dabei ist es möglich einen derartigen Flächenbelag für die Fußböden von beispielsweise Küche und/oder Badezimmer zu verwenden, aber es ist auch möglich, aufdiese Weise eine Wandverkleidung für den Naßbereich zu realisieren.

Die verwendete Technik, bei der die Fasen-Kerben 6 vollständig mit Siegellack 5 gefüllt werden, bietet neben der Wasserfestigkeit des Bodens weitere Vorteile. Dank dem Siegellack 5, der die Kerben 6 ausfüllt, können auch kleine Höhenunterschiede ausgeglichen werden. Zudem sind auf diese Weise verliebte Platten sehr viel renovationsfreundlicher als Platten, die über das Einstecken einer Feder in die Nut der benachbarten Platte zusammengehalten werden. Im hier beschriebenen Beispiel kann durch einen Messerschnitt entlang den Kerben 6 eine defekte Platte sehr einfach ausgeschnitten werden und eine neue Platte eingesetzt und neu versiegelt ohne daß die Wasserfestigkeit des Bodens beeinträchtigt wird.

Die hier beschriebene Erfindung stellt deshalb eine Lösung dar, wobei Schalldämmung, Wasserfestigkeit, Dimensionsstabilität und Reparaturfreundlichkeit auf der Basis natürlicher Materialien kombiniert werden können.

Obwohl die oben beschriebene Erfindung lediglich an Hand eines einzelnen Ausführungsbeispiels erläutert wird, wird es deutlich sein, daß die Erfindung keineswegs auf das aufgeführte Beispiel beschränkt bleibt. Im Gegenteil sind für den durchschnittlichen Fachmann noch viele Variationen und Ausführungsbeispiele denkbar, ohne daß er den Rahmen der hier behandelten Erfindung verlassen muß.

## Patentansprüche

1. Flächenbelagelement, insbesondere für Bodenbelag oder Wandverkleidung, das umfaßt:
- eine zentrale Trägerschicht aus Sperrholz,
- eine an einer ersten Seite der Trägerschicht angebrachte Oberflächenschicht und
- eine zweite, an der der Oberflächenschicht abgewandten Seite der Trägerschicht angebrachte Dämmschicht aus Kork.

2. Flächenbelagelement nach Anspruch 1, wobei die Oberflächenschicht als Furnier ausgebildet ist, wobei das Furnier insbesondere aus Holz, Kork, Metall oder einer Photoschicht gebildet ist.

3. Flächenbelagelement nach Anspruch 1 oder 2, wobei die Oberflächenschicht eine Dicke von weniger als 3 mm, vorzugsweise weniger als 1 mm und besonders vorzugsweise zwischen 0,3 und 0,5 mm aufweist.

4. Flächenbelagelement nach einem der vorhergehenden Ansprüche, wobei der Träger eine Dicke von 1 bis 5 mm, vorzugsweise eine Dicke von 2 bis 4 mm, besonders vorzugsweise von etwa 3 mm aufweist.

5. Flächenbelagelement nach einem der vorhergehenden Ansprüche, wobei das Flächenbelagelement hauptsächlich ebene senkrechte Seitenflächen aufweist.

6. Flächenbelagelement nach einem der vorhergehenden Ansprüche, wobei das Flächenbelagelement an mindestens einem Rand auf der Oberflächenschicht-Seite zum Träger hin abgeschrägt abfällt oder geneigt ist.

7. Flächenbelagelement nach Anspruch 6, wobei die Neigung am Rand des Flächenbelages so ausgebildet ist, daß ein Dichtmittel, insbesondere ein Siegellack aufgrund seines Gewichts von selbst entlang der Neigung in Richtung des Trägers hinabläuft.

8. Flächenbelagelement nach Anspruch 6 oder 7, wobei der abgeschrägte Rand des Flächenbelagelementes durch die Oberflächenschicht oder zumindest einem Teil der Oberflächenschicht begrenzt wird.

9. Flächenbelagelement nach einem der Ansprüche 6 bis 8, wobei der abgeschrägte Rand in der Nähe der Kante des Flächenbelagelementes stärker abfällt als bei einem größeren Abstand zu dieser Kante.

10. Boden- oder Wandbelag bestehend aus aneinander anliegenden Flächenbelagelementen nach einem der folgenden Ansprüche.

11. Boden- oder Wandbelag nach Anspruch 10, wobei zwischen aneinander anliegenden Flächenbelagelementen Kerben vorhanden sind, die bestimmt werden durch zumindest einen geneigten Rand des Flächenbelagelementes.

12. Boden- oder Wandbelag nach Anspruch 11, wobei über den Flächenbelagelementen eine Siegellackschicht angebracht ist, womit mindestens eine Kerbe hauptsächlich gefüllt ist.

13. Verfahren zur Herstellung eines Boden- oder Wandbelags mit den folgenden Schritten:
A) das Anbringen von aneinander anliegenden Flächenbelagelementen auf eine Art und Weise, daß nicht-durchgehende Kerben zwischen den Flächenbelagelementen entstehen,
B) das Anbringen einer Lackschicht über die aneinander anliegenden Flächenbelagelemente auf eine Art und Weise, daß die Kerben weitestgehend damit gefüllt werden, und
C) das Aushärten der Lacklage.

14. Verfahren nach Anspruch 13, wobei nach dem Anbringen und Aushärten der ersten Lackschicht entsprechend den Schritten B) und C) über die erste Lackschicht eine zweite Lackschicht angebracht wird.

15. Verfahren nach Anspruch 14, wobei der Lack der ersten Abdichtung während des Auftrags dünnflüssiger ist als der Lack der zweiten Abdichtung während des Auftrags.
